# EUROPEAN PATENT APPLICATION

(11) **EP 4 764 817 A1**
(43) Date of publication of application: **24.06.2026**
(21) Application number: 23954433.1
(22) Date of filing: 27.09.2023
(51) Int. Cl.: G06F 3/16, G06F 3/14

(54) **DISPLAY DEVICE AND DISPLAY DEVICE CONTROL METHOD**

(71) Applicant: LG Electronics Inc., Yeongdeungpo-gu Seoul 07336 (KR)
(72) Inventor: JUNG, Eunkyung, Seoul 06772 (KR)
(74) Representative: Schott, Jakob Valentin
(86) International application number: PCT/KR2023/015090
(87) International publication number: WO 2025/070848

(57) **Abstract**

A display device for providing a speech recognition function is presented. The display device comprises: a sensor for detecting the speech of a user; and a controller for verifying whether the speech of the user is an instruction for activating the speech recognition function, wherein the controller verifies the speech of the user by driving a plurality of verification engines in parallel, first outputs the result of the verification engine that has completed the verification of the speech of the user first, and can determine, on the basis of the results of the plurality of verification engines, whether the speech of the user is the instruction for activating the speech recognition function.

## Description

### TECHNICAL FIELD

The present disclosure relates to a display device and a control method thereof.

### BACKGROUND

Recently, in multimedia devices such as a mobile phone and a television (TV), a new form-factor is being discussed. The form-factor refers to a structured form of a product.

The reason why form-factor innovation is emerging as important in a display industry is because of increasing needs of a user for the form-factor that may be used freely and conveniently regardless of a use situation departing from a typical form-factor customized for a specific use environment in the past, resulted from an increase in consumer mobility, convergence between devices, a rapid progress in smartization, and the like.

For example, vertical TVs are expanding, breaking the stereotype that the TVs are viewed horizontally. The vertical TV is a product that allows the user to change a direction of a screen by reflecting characteristics of the Millennials and Gen Z who are accustomed to enjoying content on mobile. The vertical TVs are convenient because a social media or a shopping site image may be viewed easily and comments may be read while watching videos at the same time. In particular, the advantages of the vertical TV are magnified more when the vertical TV is in association with a smartphone via a near-field communication (NFC)-based mirroring function. When watching regular TV programs or movies, the TV may be switched horizontally.

As another example, a rollable TV and a foldable smartphone are similar to each other in that they both use 'flexible displays'. The flexible display literally means a flexible electronic device. To be flexible, the flexible display must first be thin. A substrate that receives information and converts the same into light must be thin and flexible so that a performance lasts for a long time without damage.

Being flexible means that the flexible display should not be greatly affected even when an impact is applied thereto. While the flexible display is bent or folded, a pressure is continuously applied to a junction. It is necessary to have excellent durability such that the inside is not damaged by such pressure, but also have a property of being easily deformed when the pressure is applied.

The flexible display is implemented based on an OLED, for example. The OLED is a display using an organic light emitting material. the organic material is relatively more flexible than an inorganic material such as a metal. Furthermore, the OLED has a thin substrate and thus is more competitive than other displays. In a case of an LCD substrate used in the past, there is a limit to reducing a thickness because liquid crystal and glass are required separately.

Finally, as a new form-factor for the TV, a demand for a TV that may be easily moved indoors and outdoors is increasing. In particular, because of the recent corona virus epidemic, the time the users stay at home is increasing, and thus, a demand for a second TV is increasing. In addition, because of an increase in population going out for camping or the like, there is a demand for the TV of the new form-factor that may be easily carried and moved.

Unlike conventional TVs, such TVs may be driven by software referred to as an operating system and may provide a user interface through an application or a program.

In addition, control of the TV through a user voice command and execution of an application or a program on the TV are becoming common.

The operating system may be determined for each model upon shipment of the TV or may be installed as the latest version available at the time of shipment and provided to a user. With the release of TVs having various form factors, various versions of the OS may also be provided for the TVs, and after release, updates to the OS software may be required over time.

As the operating system software is updated, a decision or a method may be required regarding management of software (that is, a verification engine) for wake word verification based on a user voice for a voice command function or a voice recognition-based service. This is because a result of recognition of the user voice may depend on hardware conditions such as a microphone and a distance between a microphone and a speaker.

The following description is not limited to TVs and may be applied to any device that outputs video or audio and supports a voice command through voice recognition. Accordingly, the term display device is used in place of the term TV.

### DISCLOSURE

### Technical Problem

The present disclosure is directed to providing a method for managing and using software (that is, a verification engine) for wake word verification based on a user voice for voice recognition in order to address the above-described problems.

More specifically, the present disclosure is directed to providing a method in which a server designates a configuration for software (that is, a verification engine) for verification of a wake word to be used by a display device and to provide a specific method for driving or using the verification engine.

The objectives to be achieved by the present disclosure are not limited to the above-described objectives, and other objectives not mentioned above will be clearly understood by a person having ordinary skill in the technical field to which the present disclosure belongs from the following description.

### Technical Solution

In an aspect of the present disclosure, a display device configured to provide a voice recognition function is provided. The display device includes: a sensor configured to detect a voice of a user; and a controller configured to verify whether the voice of the user is a wake-up command for the voice recognition function. The controller is configured to: verify the voice of the user by operating a plurality of verification engines in parallel; first output a result from a verification engine that completes verification of the voice of the user earlier; and determine, based on results from the plurality of verification engines, whether the voice of the user is the wake-up command for the voice recognition function.

In another aspect of the present disclosure, a system for a voice recognition function is provided, the system including a display device and a wake word verification server. The display device includes: a sensor configured to detect a voice of a user; and a controller configured to verify whether the voice of the user is a wake-up command for a voice recognition function. The wake word verification server includes a controller configured to receive the voice of the user from the display device and verify whether the voice of the user is the wake-up command for the voice recognition function. The controller of the display device is configured to: control a plurality of verification engines of the display device or the wake word verification server to operate in parallel to verify the voice of the user; and determine, based on results from verification engines embedded in the display device and results from verification engines embedded in the wake word verification server, whether the voice of the user is the wake-up command for the voice recognition function.

In a further aspect of the present disclosure, a method for a voice recognition function is provided. The method is performed by a display device including a sensor configured to detect a voice of a user and a controller configured to verify whether the voice of the user is a wake-up command for the voice recognition function. The method includes: recognizing the voice of the user; operating a plurality of verification engines in parallel to initiate a procedure for verifying the voice of the user; first outputting a result from a verification engine that completes verification of the voice of the user earlier; and determining, based on results from the plurality of verification engines, whether the voice of the user is the wake-up command for the voice recognition function.

The solutions described above are merely some embodiments of the present disclosure. Various embodiments in which technical features of the present disclosure are reflected may be derived and understood by a person having ordinary skill in the art based on the detailed description of the present disclosure to be described below.

### Advantageous Effects

The present disclosure provides the following effects.

The present disclosure allows separate management of a verification engine for voice recognition even when software of a display device is updated, thereby enabling efficient performance of wake word verification that initiates a voice recognition service.

In addition, the present disclosure allows reduction of time required for wake word verification by operating a plurality of verification engines in parallel for wake word verification that initiates a voice recognition service.

In addition, the present disclosure allows reduction of time required to perform wake word verification that initiates a voice recognition service and provides scalability of an algorithm for a verification engine by operating a plurality of verification engines belonging to different entities in parallel.

### BRIEF DESCRIPTION OF THE DRAWINGS

The accompanying drawings, which are included as a part of the detailed description to assist understanding of the present disclosure, provide embodiments of the present disclosure and describe the technical idea of the present disclosure together with the detailed description.
FIG. 1 is a block diagram for explaining components of a display device.
FIG. 2 is a diagram illustrating a display device according to an embodiment of the present disclosure.
FIG. 3 illustrates a procedure for wake word recognition or voice recognition service activation for a voice recognition service according to the present disclosure.
FIG. 4 illustrates a procedure for wake word recognition and wake word verification for a voice recognition service according to the present disclosure.
FIG. 5 illustrates a flowchart of a procedure for wake word recognition and wake word verification for a voice recognition service according to the present disclosure.
FIG. 6 illustrates a flowchart of a procedure for wake word recognition and wake word verification for a voice recognition service according to the present disclosure.
FIG. 7 illustrates a flowchart of a procedure for wake word recognition and wake word verification for a voice recognition service according to the present disclosure.
FIG. 8 illustrates a block diagram of a controller for wake word recognition and wake word verification for a voice recognition service according to the present disclosure.
FIG. 9 illustrates a block diagram of a system for wake word recognition and wake word verification for a voice recognition service according to the present disclosure.

### DETAILED DESCRIPTION

Hereinafter, the embodiments disclosed herein will be described in detail with reference to the accompanying drawings, but components that are the same as or similar to each other regardless of reference numerals will be given the same reference numerals, and redundant description thereof will be omitted. The suffixes "module" and "unit" for components used in the following description are given or used together in consideration of ease of writing the present document, and do not have meanings or roles that are distinct from each other by themselves. Further, in describing the embodiments disclosed herein, when it is determined that a detailed description of related known technologies may unnecessarily obscure the gist of the embodiments disclosed herein, detailed description thereof will be omitted. In addition, the attached drawings are provided for easy understanding of the embodiments disclosed herein and do not limit technical idea disclosed herein, and should be construed as including all modifications, equivalents, and alternatives falling within the spirit and scope of the present disclosure.

Although terms including ordinal numbers, such as first, second, and the like, may be used to describe various components, the components may not be limited by the terms. The terms are only used to distinguish one component from another.

It should be understood that when a component is referred to as being "connected with" another component, the component may be directly connected with another component or an intervening component may also be present. In contrast, it should be understood that when a component is referred to as being "directly connected with" another component, there is no intervening component present.

A singular representation may include a plural representation unless it represents a definitely different meaning from the context.

The terms "includes" or "has" used herein should be understood as not precluding possibility of existence or addition of one or more other characteristics, figures, steps, operations, constituents, components, or combinations thereto.

In the following descriptions, the term "display device" will be used. However, the term "display device" may refer to various devices such as TVs, multimedia devices, and so on, and thus, the scope of the present disclosure is not limited to specific terminology.

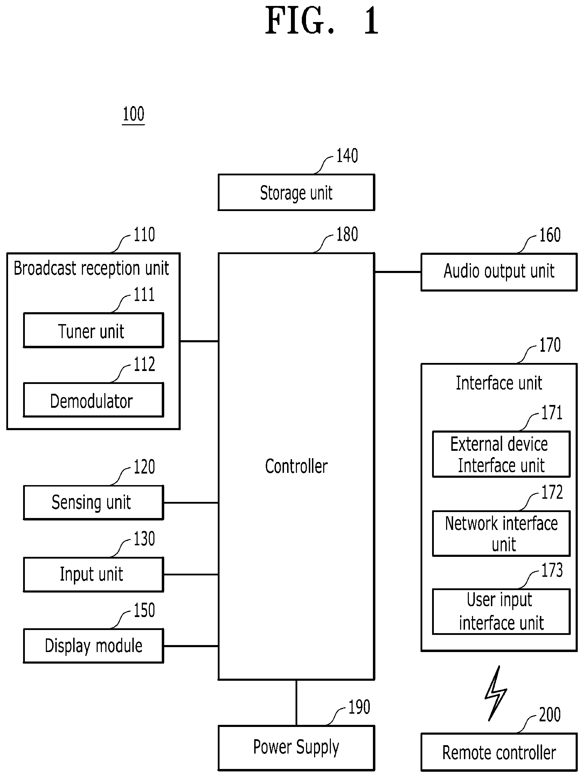

FIG. 1 is a block diagram for illustrating each component of a display device 100 according to an embodiment of the present disclosure.

The display device 100 may include a broadcast receiver 1210, an external device interface 171, a network interface 172, storage 140, a user input interface 173, an input unit 130, and a controller 180, a display module 150, an audio output unit 160, and/or a power supply 190.

The broadcast receiver 1210 may include a tuner 1211 and a demodulator 1212.

Unlike the drawing, the display device 100 may include only the external device interface 171 and the network interface 172 among the broadcast receiver 1210, the external device interface 171, and the network interface 172. That is, the display device 100 may not include the broadcast receiver 1210.

The tuner 1211 may select a broadcast signal corresponding to a channel selected by the user or all pre-stored channels among broadcast signals received via an antenna (not shown) or a cable (not shown). The tuner 1211 may convert the selected broadcast signal into an intermediate-frequency signal or a base band image or audio signal.

For example, when the selected broadcast signal is a digital broadcast signal, the tuner 1211 may convert the digital broadcast signal into a digital IF signal (DIF), and when the selected broadcast signal is an analog broadcast signal, the tuner 1211 may convert the analog broadcast signal into an analog base band image or audio signal (CVBS/SIF). That is, the tuner 1211 may process the digital broadcast signal or the analog broadcast signal. The analog base band image or audio signal (CVBS/SIF) output from the tuner 1211 may be directly input to the controller 180.

In one example, the tuner 1211 may sequentially select broadcast signals of all stored broadcast channels via a channel memory function among the received broadcast signals, and convert the selected signals into the intermediate-frequency signal or the base band image or audio signal.

In one example, the tuner 1211 may include a plurality of tuners to receive broadcast signals of a plurality of channels. Alternatively, the tuner 1211 may be a single tuner that simultaneously receives the broadcast signals of the plurality of channels.

The demodulator 1212 may receive the digital IF signal (DIF) converted by the tuner 1211 and perform a demodulation operation. The demodulator 1212 may output a stream signal (TS) after performing demodulation and channel decoding. In this regard, the stream signal may be a signal in which an image signal, an audio signal, or a data signal is multiplexed.

The stream signal output from the demodulator 1212 may be input to the controller 180. The controller 180 may output an image via the display module 150 and output an audio via the audio output unit 160 after performing demultiplexing, image/audio signal processing, and the like.

A sensing unit 120 refers to a device that senses a change in the display device 100 or an external change. For example, the sensing unit 120 may include at least one of a proximity sensor, an illumination sensor, a touch sensor, an infrared (IR) sensor, an ultrasonic sensor, an optical sensor (e.g., a camera), a voice sensor (e.g., a microphone), a battery gauge, and an environment sensor (e.g., a hygrometer, a thermometer, and the like).

The controller 180 may check a state of the display device 100 based on information collected by the sensing unit 120, and when a problem occurs, the controller 180 may notify the user of the problem or may make adjustments on its own to control the display device 100 to maintain the best state.

In addition, a content, an image quality, a size, and the like of the image provided by the display module 150 may be controlled differently based on a viewer sensed by the sensing unit, a surrounding illumination, or the like to provide an optimal viewing environment. As a smart TV progresses, the number of functions of the display device increases and the number of sensing units 20 also increases together.

The input unit 130 may be disposed at one side of a main body of the display device 100. For example, the input unit 130 may include a touch pad, a physical button, and the like. The input unit 130 may receive various user commands related to an operation of the display device 100 and transmit a control signal corresponding to the input command to the controller 180.

Recently, as a size of a bezel of the display device 100 decreases, the number of display devices 100 in a form in which the input unit 130 in a form of a physical button exposed to the outside is minimized is increasing. Instead, the minimized physical button may be located on a rear surface or a side surface of the display device 100, and a user input may be received from a remote control device 200 via the touch pad or the user input interface 173 to be described later.

The storage 140 may store programs for processing and controlling each signal in the controller 180, or may store signal-processed image, audio, or data signals. For example, the storage 140 may store application programs designed for the purpose of performing various tasks processable by the controller 180, and may selectively provide some of the stored application programs upon request from the controller 180.

The programs stored in the storage 140 are not particularly limited as long as they may be executed by the controller 180. The storage 140 may also perform a function for temporarily storing the image, audio, or data signals received from an external device via the external device interface 171. The storage 140 may store information on a predetermined broadcast channel via the channel memory function such as a channel map.

FIG. 1 shows an embodiment in which the storage 140 is disposed separately from the controller 180, but the scope of the present disclosure is not limited thereto, and the storage 140 is able to be included in the controller 180.

The storage 140 may include at least one of a volatile memory (e.g., a DRAM, a SRAM, a SDRAM, and the like) or a non-volatile memory (e.g., a flash memory, a hard disk drive (HDD), a solid-state drive (SSD), and the like).

The display module 150 may generate a driving signal by converting the image signal, the data signal, an OSD signal, and a control signal processed by the controller 180 or the image signal, the data signal, a control signal, and the like received from the interface 171. The display module 150 may include the display panel 11 having the plurality of pixels.

The plurality of pixels disposed on the display panel may include RGB sub-pixels. Alternatively, the plurality of pixels disposed on the display panel may include RGBW sub-pixels. The display module 150 may generate driving signals for the plurality of pixels by converting the image signal, the data signal, the OSD signal, the control signal, and the like processed by the controller 180.

The display module 150 may be a plasma display panel (PDP), a liquid crystal display (LCD), an organic light emitting diode (OLED), a flexible display module, and the like, or may be a three-dimensional (3D) display module. The 3D display module 150 may be classified into a non-glasses type and a glasses type.

The display device 100 includes the display module that occupies most of the front surface thereof and a casing that covers a rear surface, a side surface, and the like of the display module and packages the display module.

Recently, the display device 100 may use the display module 150 that may be bent such as the light emitting diode (LED) or the organic light emitting diode (OLED) to realize a curved screen in addition to a flat screen.

The LCD, which was mainly used in the past, received light via a backlight unit because it was difficult for the LCD to emit light on its own. The backlight unit is a device that uniformly supplies light supplied from a light source to a liquid crystal located in the front. As the backlight unit became thinner, it was possible to realize a thin LCD, but it was difficult to implement the backlight unit with a flexible material, and when the backlight unit is bent, it was difficult to uniformly supply the light to the liquid crystal, resulting in a change in brightness of the screen.

On the other hand, the LED or the OLED may be implemented to be bendable because each element constituting the pixel emits light on its own and thus the backlight unit is not used. In addition, because each element emits light on its own, even when a positional relationship with a neighboring element changes, brightness thereof is not affected, so that the display module 150 that is bendable using the LED or the OLED may be implemented.

The organic light emitting diode (OLED) panel appeared in earnest in mid-2010 and is rapidly replacing the LCD in a small and medium-sized display market. The OLED is a display made using a self-luminous phenomenon of emitting light when current flows through a fluorescent organic compound. The OLED has a higher image quality response speed than the LCD, so that there is almost no afterimage when realizing a moving image.

The OLED is a light-emitting display product that uses three types (red, green, and blue) of phosphor organic compounds having a self-luminous function, and uses a phenomenon in which electrons and positively charged particles injected from a cathode and an anode are combined with each other within an organic material to emit light by itself, so that there is no need for a backlight (a backlight device) that deteriorates color.

The light emitting diode (LED) panel, as a technology that uses one LED element as one pixel, may reduce a size of the LED element compared to the prior art, and thus, may implement the display module 150 that is bendable. A device referred to as an LED TV in the past only used the LED as the light source for the backlight unit that supplies the light to the LCD, and the LED itself was not able to constitute the screen.

The display module includes the display panel, and a coupling magnet, a first power supply, and a first signal module positioned on a rear surface of the display panel. The display panel may include a plurality of pixels R, G, and B. The plurality of pixels R, G, and B may be formed in respective areas where multiple data lines and multiple gate lines intersect each other. The plurality of pixels R, G, and B may be disposed or arranged in a matrix form.

For example, the plurality of pixels R, G, and B may include a red (hereinafter, 'R') sub-pixel, a green ('G') sub-pixel, and a blue ('B') sub-pixel. The plurality of pixels R, G, and B may further include a white (hereinafter, 'W') sub-pixel.

In the display module 150, a side on which the image is displayed may be referred to as a front side or a front surface. When the display module 150 displays the image, a side on which the image is not able to be observed may be referred to as a rear side or a rear surface.

In one example, the display module 150 may be constructed as the touch screen and may be used as the input device in addition to the output device.

The audio output unit 160 receives an audio-processed signal from the controller 180 and outputs the received signal as the audio.

An interface 170 serves as a passage for various types of external devices connected to the display device 100. The interface may be in a wireless scheme using the antenna as well as a wired scheme of transmitting and receiving data via the cable.

The interface 170 may include at least one of a wired/wireless headset port, an external charger port, a wired/wireless data port, a memory card port, a port for connecting a device having an identification module, an audio input/output (I/O) port, a video input/output (I/O) port, and an earphone port.

An example of the wireless scheme may include the broadcast receiver 1210 described above, and may include not only the broadcast signal, but also a mobile communication signal, a short-distance communication signal, a wireless Internet signal, and the like.

The external device interface 171 may transmit or receive data with a connected external device. To this end, the external device interface 171 may include an A/V input/output unit (not shown).

The external device interface 171 may be connected to the external device such as a digital versatile disk (DVD), a Blu-ray, a game console, a camera, a camcorder, a computer (a laptop), a set-top box, and the like in a wired/wireless manner, and may perform input/output operations with the external device.

In addition, the external device interface 171 may establish a communication network with various remote control devices 200 to receive a control signal related to the operation of the display device 100 from the remote control device 200 or to transmit data related to the operation of the display device 100 to the remote control device 200.

The external device interface 171 may include a wireless communication unit (not shown) for short-range wireless communication with other electronic devices. With such a wireless communication unit (not shown), the external device interface 171 may exchange data with an adjacent mobile terminal. In particular, the external device interface 171 may receive device information, running application information, an application image, and the like from the mobile terminal in a mirroring mode.

The network interface 172 may provide an interface for connecting the display device 100 to a wired/wireless network including an Internet network. For example, the network interface 172 may receive content or data provided by the Internet, a content provider, or a network operator via the network. In one example, the network interface 172 may include a communication module (not shown) for connection to the wired/wireless network.

The external device interface 171 and/or the network interface 172 may include a communication module for the short-range communication such as a wireless fidelity (Wi-Fi), a Bluetooth, a Bluetooth low energy (BLE), a Zigbee, and a near field communication (NFC), a communication module for cellular communication such as a long-term evolution (LTE), an LTE advance (LTE-A), a code division multiple access (CDMA), a wideband CDMA (WCDMA), a universal mobile telecommunications system (UMTS), and a wireless broadband (WiBro), and the like.

The user input interface 173 may transmit a signal input by the user to the controller 180 or transmit a signal from the controller 180 to the user. For example, a user input signal such as power ON/OFF, channel selection, screen setting, and the like may be transmitted/received to/from the remote control device 200, a user input signal input from a local key (not shown) such as a power key, a channel key, a volume key, a setting value, and the like may be transmitted to the controller 180, a user input signal input from a sensor unit (not shown) that senses a gesture of the user may be transmitted to the controller 180, or a signal from the controller 180 may be transmitted to the sensor unit.

The controller 180 may include at least one processor, and may control overall operations of the display device 100 using the processor included therein. In this regard, the processor may be a general processor such as a central processing unit (CPU). In one example, the processor may be a dedicated device such as an ASIC or a processor based on other hardware.

The controller 180 may demultiplex the stream input via the tuner 1211, the demodulator 1212, the external device interface 171, or the network interface 172, or process a demultiplexed signal to generate or output a signal for image or audio output.

The image signal image-processed by the controller 180 may be input to the display module 150 and displayed as an image corresponding to the corresponding image signal. In addition, the image signal image-processed by the controller 180 may be input to an external output device via the external device interface 171.

The audio signal processed by the controller 180 may be output as the audio via the audio output unit 160. In addition, the audio signal processed by the controller 180 may be input to the external output device via the external device interface 171. In addition, the controller 180 may include a demultiplexer, an image processor, and the like.

In addition, the controller 180 may control overall operations within the display device 100. For example, the controller 180 may control the tuner 1211 to select (tune) a broadcast corresponding to the channel selected by the user or the pre-stored channel.

In addition, the controller 180 may control the display device 100 in response to a user command input via the user input interface 173 or by an internal program. In one example, the controller 180 may control the display module 150 to display the image. In this regard, the image displayed on the display module 150 may be a still image or a moving image, and may be a 2D image or a 3D image.

In one example, the controller 180 may allow a predetermined 2D object to be displayed within the image displayed on the display module 150. For example, the object may be at least one of a connected web screen (a newspaper, a magazine, and the like), an electronic program guide (EPG), various menus, a widget, an icon, the still image, the moving image, and a text.

In one example, the controller 180 may modulate and/or demodulate a signal using an amplitude shift keying (ASK) scheme. Here, the amplitude shift keying (ASK) scheme may refer to a scheme of modulating the signal by varying an amplitude of a carrier wave based on a data value or restoring an analog signal to a digital data value based on to the amplitude of the carrier wave.

For example, the controller 180 may modulate the image signal using the amplitude shift keying (ASK) scheme and transmit the modulated image signal via a wireless communication module.

For example, the controller 180 may demodulate and process the image signal received via the wireless communication module using the amplitude shift keying (ASK) scheme.

Therefore, the display device 100 may easily transmit and receive a signal with another image display device disposed adjacent thereto without using a unique identifier such as a media access control address (MAC address) or a complex communication protocol such as TCP/IP.

In one example, the display device 100 may further include a photographing unit (not shown). The photographing unit may photograph the user. The photographing unit may be implemented with one camera, but may not be limited thereto, and may be implemented with a plurality of cameras. In one example, the photographing unit may be embedded in the display device 100 or disposed separately upwardly of the display module 150. Information on the image photographed by the photographing unit may be input to the controller 180.

The controller 180 may recognize a location of the user based on the image photographed by the photographing unit. For example, the controller 180 may identify a distance between the user and the display device 100 (a z-axis coordinate). In addition, the controller 180 may determine an x-axis coordinate and a y-axis coordinate within the display module 150 corresponding to the location of the user.

The controller 180 may sense the gesture of the user based on the image photographed by the photographing unit or the signal sensed by the sensor unit, or a combination thereof.

The power supply 190 may supply the corresponding power throughout the display device 100. In particular, the power may be supplied to the controller 180 that may be implemented in a form of a system on chip (SOC), the display module 150 for displaying the image, the audio output unit 160 for outputting the audio, and the like.

Specifically, the power supply 190 may include a converter (not shown) that converts AC power to DC power and a Dc/Dc converter (not shown) that converts a level of the DC power.

In one example, the power supply 190 serves to receive the power from the outside and distribute the power to each component. The power supply 190 may use a scheme of supplying the AC power in direct connection to an external power source, and may include a power supply 190 that may be charged and used by including a battery.

In a case of the former, the power supply is used in connection with the cable, and has difficulties in moving or is limited in a movement range. In a case of the latter, the movement is free, but a weight and a volume of the power supply increase as much as those of the battery, and the power supply must be directly connected to a power cable for a certain period of time for charging or coupled to a charging cradle (not shown) that supplies the power.

The charging cradle may be connected to the display device via a terminal exposed to the outside, or the built-in battery may be charged using a wireless scheme when approaching the charging cradle.

The remote control device 200 may transmit the user input to the user input interface 173. To this end, the remote control device 200 may use the Bluetooth, a radio frequency (RF) communication, an infrared radiation (IR) communication, an ultra-wideband (UWB), the ZigBee, or the like. In addition, the remote control device 200 may receive the image, audio, or data signal output from the user input interface 173 and display the same thereon or output the same as audio.

In one example, the display device 100 described above may be a fixed or mobile digital broadcast receiver that may receive a digital broadcast.

The block diagram of the display device 100 shown in FIG. 1 is only a block diagram for one embodiment of the present disclosure, and each component of the block diagram is able to be integrated, added, or omitted based on specifications of the display device 100 that is actually implemented.

That is, when necessary, two or more components may be combined to each other into one component, or one component may be subdivided into two or more components. In addition, functions performed in each block are for illustrating the embodiment of the present disclosure, and a specific operation or a device thereof does not limit the scope of rights of the present disclosure.

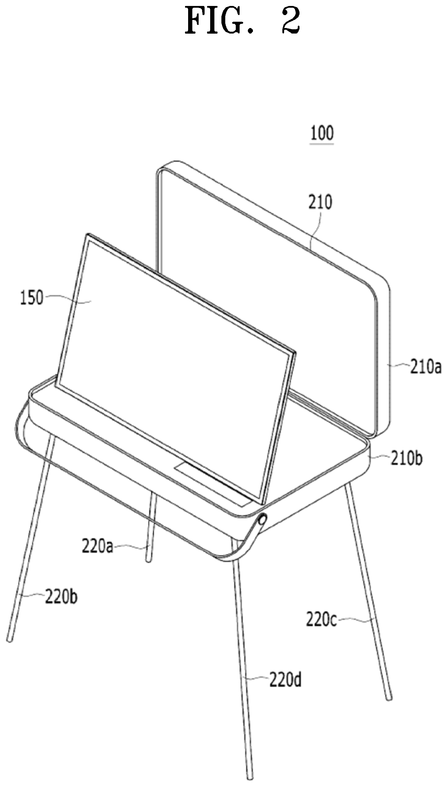

FIG. 2 is a diagram showing a display device according to an embodiment of the present disclosure. Hereinafter, redundant descriptions duplicate with the above descriptions will be omitted.

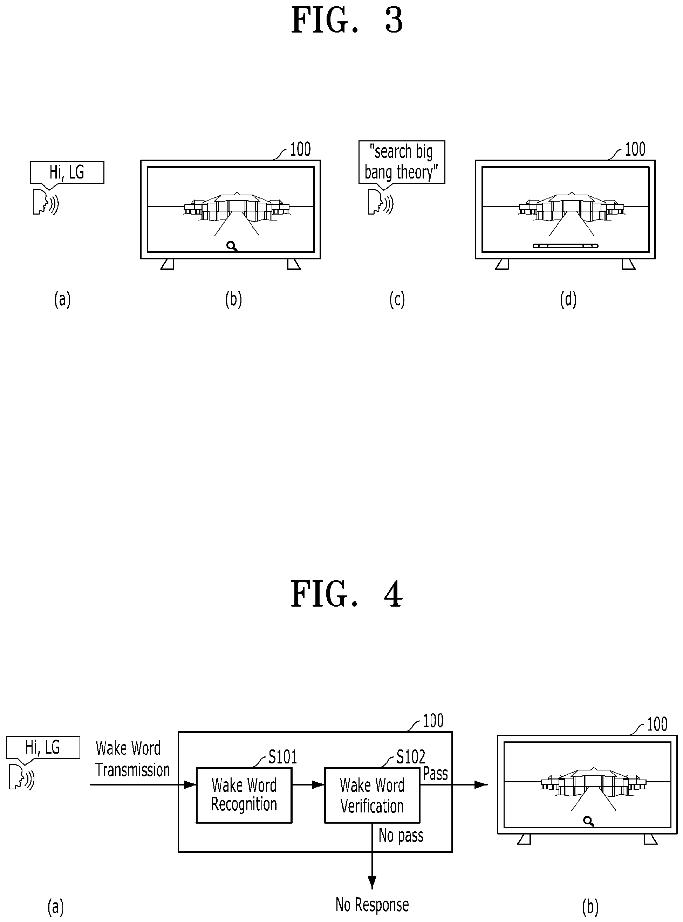

Referring to FIG. 4, the display device 100 has the display module 150 accommodated inside a housing 210. In this regard, the housing 210 may include an upper casing 210a and a lower casing 210b, and the upper casing 210a and the lower casing 210b may have a structure of being opened and closed.

In one embodiment, the audio output unit 160 may be included in the upper casing 210a of the display device 100, and the main board that is the controller 180, a power board, the power supply 190, the battery, the interface 170, the sensing unit 120, and the input unit (including the local key) 130 may be accommodated in the lower casing 210b. In this regard, the interface 170 may include a Wi-Fi module, a Bluetooth module, an NFC module, and the like for the communication with the external device, and the sensing unit 120 may include an illuminance sensor and an IR sensor.

In one embodiment, the display module 150 may include a DC-DC board, a sensor, and a low voltage differential signaling (LVDS) conversion board.

In addition, in one embodiment, the display device 100 may further include four detachable legs 220a, 220b, 220c, and 220d. In this regard, the four legs 220a, 220b, 220c, and 220d may be attached to the lower casing 210b to space the display device 100 from the floor.

The display device according to FIG. 2 has a movable feature.

FIG. 3 illustrates a procedure for wake word recognition or voice recognition service activation for a voice recognition service according to the present disclosure.

In FIG. 3, (a) to (d) indicate sequential steps.

To initiate a voice recognition service for the display device 100, a user says "Hi, LG" ((a) of FIG. 3). The wake word is predetermined for the voice recognition service and is provided as an example, and another wake word may be configured.

The display device 100 outputs, on a display, information indicating that control based on a voice command (or the voice recognition service) is initiated ((b) of FIG. 3), thereby notifying a user to utter a voice command or that a voice command should be uttered, or notifying that the display device 100 is ready to recognize a voice command from the user.

Accordingly, the user inputs a voice command by uttering "search big bang theory" ((c) of FIG. 3).

The display device 100 recognizes the voice command from the user and performs a search based on the recognized voice command ((d) of FIG. 3).

The voice recognition service of the display device 100 may be provided in the manner described above with reference to FIG. 3. However, in order to enter a state of (b) of FIG. 3, verification of whether an uttered wake word of the user corresponds to the predetermined wake word ("Hi, LG") is required, and the uttered wake word of the user should be verified as the predetermined wake word.

This is because the display device 100 is intended for viewing video, and if the voice recognition service is initiated as a result of misrecognition even though the user has not actually initiated the voice recognition service, the initiation may interfere with the viewing environment of the user.

FIG. 4 illustrates a procedure for wake word recognition and wake word verification for a voice recognition service according to the present disclosure.

Since (a) and (b) of FIG. 4 are identical to (a) and (b) of FIG. 3, respectively, description thereof is omitted.

When an utterance or voice of a user is input, the display device 100 performs a wake word recognition step (S101) and a wake word verification step (S102). When the utterance or voice of the user is verified as a wake word according to the wake word verification step (S102), the display device 100 initiates a voice recognition service as shown in (b) of FIG. 4.

In the following, the wake word verification step will be described in more detail with respect to an update of operating system software of the display device (hereinafter referred to as "software").

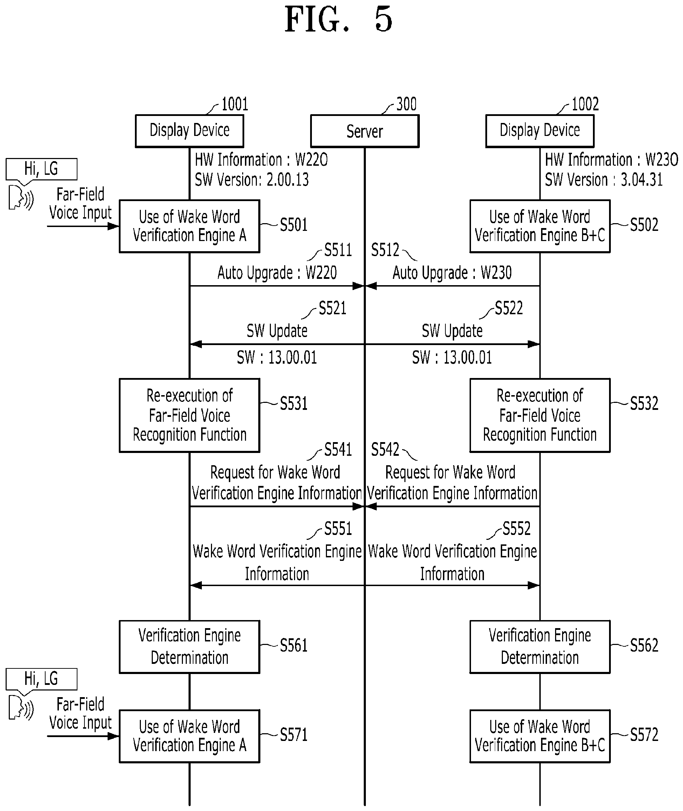

FIG. 5 illustrates a flowchart of a procedure for wake word recognition and wake word verification for a voice recognition service according to the present disclosure.

Referring to FIG. 5, although two display devices 1001 and 1002 are illustrated, this is merely an example, and the procedure described below may be applied through one or more display devices and a server 300.

The display device 1001 and the display device 1002 may be general home TVs. As indicated by software version information, the display device 1002 may be identified as a newer model released later than the display device 1003.

Each display device is configured to use a predetermined wake word verification engine according to hardware information and software version information. However, upon update to the latest version of software, an issue regarding how to manage the wake word verification engine should be addressed.

As illustrated in FIG. 5, even after the software version of each display device is updated, each display device may be configured to continue using the wake word verification engine used before the software update. However, this is merely one example, and the wake word verification engine to be used may be determined according to wake word verification engine information (S551 and S552) provided by the server. For example, an improved version of the wake word verification engine used before the software update may be used.

Returning to FIG. 5, each of the display devices 1001 and 1002 receives a voice input from a user for initiating a voice recognition service and performs wake word verification based thereon (S501 and S502). The display devices 1001 and 1002 use wake word verification engines A and B+C, respectively, for wake word verification (hereinafter referred to as "verification engines"). Here, "B+C" indicates that two verification engines, B and C, are used.

A software update of each of the display devices 1001 and 1002 is completed by the server 300 (software versions are changed from 2.00.13 and 3.04.31 to 13.00.01) (S511 and S521, and S512 and S522). Software version 13.00.01 is the latest software version, and it is assumed that a display device designed or configured based on the software version uses wake word verification engine D.

Thereafter, a far-field voice recognition function is re-executed for each of the display devices 1001 and 1002 (S531 and S532).

The display devices 1001 and 1002 may transmit a request for wake word verification engine information to the server 300 (S541, S542). The request for wake word verification engine information is used to obtain, from the server 300, a wake word verification engine to be used by the display devices 1001 and 1002. The request for wake word verification engine information may include software version information of the display devices 1001 and 1002, hardware information, and version information of the server.

Accordingly, the server 300 may transmit wake word verification engine information to be used by each of the display devices 1001 and 1002 to the display devices 1001 and 1002 (S551 and S552).

The wake word verification engine information to be used by each of the display devices 1001 and 1002 depends on hardware information of the display device. That is, the wake word verification engine information to be used by the display device may be determined based on the hardware information of the display device. Voice recognition depends on performance of a voice detector (that is, a sensor such as a microphone) since the hardware information of each display device, including a position of a microphone, an arrangement structure of a microphone and a speaker, and a distance between a microphone and a speaker, may affect a voice recognition result. Accordingly, even when software of the display device is updated to the latest version, a verification engine supported by the latest software may not be used, and a verification engine based at least on hardware information of the display device may be used. In addition, the software version of each of the display devices 1001 and 1002 may also be used to determine the wake word verification engine information for the display devices 1001 and 1002.

Wake word verification engine information to be used by a display device may be predetermined. Alternatively, the wake word verification engine information to be used by the display device may be dynamically determined by a server based at least on information included in a request for wake word verification engine information.

The display devices 1001 and 1002 determine a verification engine according to wake word verification engine information received from the server 300 (S561 and S562). For example, when the received wake word verification engine information indicates verification engine A, the display device determines verification engine A as the verification engine to be used. That is, although the latest software version 13.00.01 of the display device is configured to cause the display device to use verification engine D, verification engines A and B+C most suitable for the display devices 1001 and 1002 may be used according to the request for wake word verification engine information and exchange (or transmission and reception) of the wake word verification engine information with the server 300. In conclusion, a verification engine supported by the latest version of software of the display devices 1001 and 1002 and a verification engine to be used by the display devices 1001 and 1002 may be different from each other.

The display devices 1001 and 1002 use the determined verification engine for wake word verification (S571 and S572).

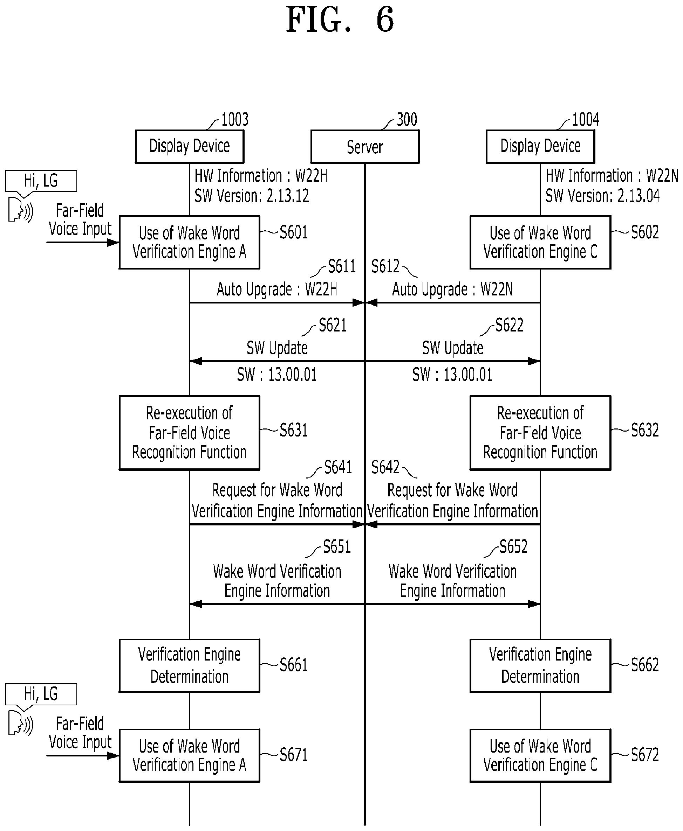

FIG. 6 illustrates a flowchart of a procedure for wake word recognition and wake word verification for a voice recognition service according to the present disclosure.

Referring to FIG. 6, although two display devices 1003 and 1004 are illustrated, this is merely an example, and the procedure described below may be applied through one or more display devices and the server 300.

The display device 1003 may be a general indoor TV, and the display device 1004 may be an outdoor TV.

As indicated by software version information, the display device 1003 may be identified as a newer model released later than the display device 1004.

FIG. 6 differs from FIG. 5 only in hardware information and software version information of each display device, and other aspects are the same as those of FIG. 5.

As described above with reference to FIG. 5, a verification engine used by the display devices 1003 and 1004 after a software update may be identical to a verification engine used before the software update. However, this is merely an example, and a verification engine specified in wake word verification engine information (S651 and S652) may be used.

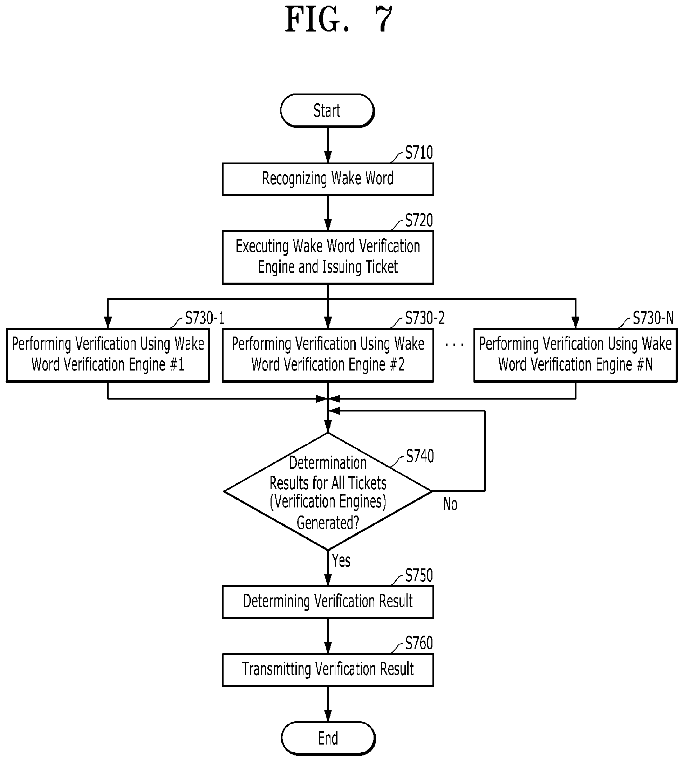

FIG. 7 illustrates a flowchart of a procedure for wake word recognition and wake word verification for a voice recognition service according to the present disclosure. The procedure of FIG. 7 is performed by the display device 100. The display device 100 includes a sensor configured to detect a voice of a user and a controller configured to verify whether the voice of the user is a command for activating a voice recognition function. In addition, the display device 100 may further include a display 150.

The display device 100 may recognize a wake word for a voice recognition service by recognizing the voice of the user (S710).

Thereafter, the display device 100 executes a wake word verification engine and issues a ticket (S720).

A ticket is generated for each recognized wake word. That is, the same ticket is used for one wake word, and the ticket may be configured to have a positive integer value. In addition, tickets corresponding to the number of verification engines to be used are generated.

Accordingly, when one wake word is recognized and, as described with reference to FIGS. 5 and 6, it is assumed that two verification engines are received from the server 300, two tickets having a value of "1" are issued. In addition, to manage the number of issued tickets having the value "1," a verification counter value is defined, and the verification counter value may be set to be equal to the number of tickets having the issued value (that is, in the above example, the verification counter value is 2).

When wake words are consecutively input and recognized, tickets having different ticket values are issued for each wake word. For example, a ticket having a value of "1" is issued for a first wake word, and a ticket having a value of "2" is issued for a second wake word.

The display device 100 executes wake word verification engines in parallel to perform wake word verification (S730-1, S730-2, ..., S730-N). In FIG. 7, N verification engines are illustrated as being used, and N is an integer greater than or equal to 1. For reference, when the number of verification engines is 1, parallel execution is not performed.

Each verification engine may output a verification result for the recognized wake word by using a verification algorithm. The verification results obtained from the verification engines may be stored and managed as illustrated in Table 1 described below.

A verification result is determined by collecting results from one or more verification engines corresponding to tickets having the same value, that is, corresponding to one wake word. Accordingly, the display device 100 may determine whether determination results for all issued tickets have been generated or completely collected (S740). The above-described verification counter value may be used for this purpose. The verification counter value set at issuance of the tickets is decreased by 1 each time a verification result from each verification engine is generated and collected, and whether the verification counter value has reached 0 may be used to determine the result of S740.

The display device 100 collects the verification results determined by each verification engine and determines a final verification result (S750). In this case, when a plurality of verification engines are used, the display device 100 may derive the verification result by applying individual weights to the results from each verification engine. Individual weights applied to the results from each verification engine may be the same, may be different, or at least some of the weights may be the same and others may be different.

The verification result is classified into Pass and No pass (or Fail), and a threshold or reference value for determination may be configured and implemented in various manners.

The display device 100 may transmit the verification result to a storage, such as a memory for managing verification results (S760).

When the verification result is Pass, the display device 100 may transmit the verification result to another service, application, or program within the display device 100, to another service supported by the display device 100, or to a related device.

The following table shows that the display device 100 stores and manages verification results related to wake word verification engines based on a queue data structure.

**[Table 1]**

| | | | |
|---|---|---|---|
| Ticket: "1" | Ticket: "2" | Ticket: "1" | ... |
| VeriCnt: 1 | VeriCnt: 2 | VeriCnt: 0 | |
| VeriRst: K1 | VeriRst: K2 | VeriRst: K3 | |

In Table 1, Ticket indicates a ticket value, VeriCnt indicates a verification counter value, and VeriRst indicates a verification result derived from a verification engine.

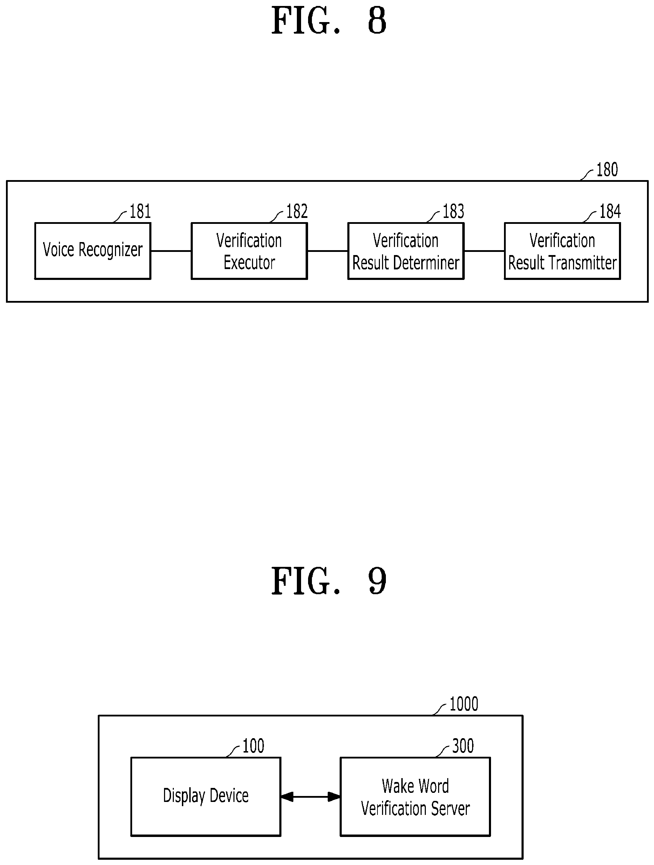

FIG. 8 illustrates a block diagram of the controller 180 of the display device 100 for wake word recognition and wake word verification for a voice recognition service according to the present disclosure. The "controller" may be referred to as a control unit. In addition, a brief description is provided below with reference to the block diagram of FIG. 8. Portions overlapping with the description of the present disclosure provided above with reference to FIGS. 3 to 7 are omitted below, and the above description is referred to for such portions.

The controller 180 may include a voice recognizer 181, a verification executor 182, a verification result determiner 183, and a verification result transmitter 184.

The voice recognizer 181 may recognize a voice of a user. The voice recognizer 181 may be implemented as a sensor such as a microphone.

The verification executor 182 may verify whether the recognized voice of the user corresponds to a wake word for a voice recognition service. The verification executor 182 may use the verification engine described above and may use at least one verification engine.

The verification result determiner 183 may collect verification results from each verification engine and derive a verification result for one wake word.

The verification result transmitter 184 may store the verification result obtained from the verification result determiner 183 in a storage such as a memory and transmit the verification result to another service, application, or program within the display device 100, to another service supported by the display device 100, or to a related device.

FIG. 9 illustrates a block diagram of a system for wake word recognition and wake word verification for a voice recognition service according to the present disclosure.

As described above, the verification engine has been described as being embedded in the display device 100, in the controller 180 of the display device 100, or in another component of the display device 100.

However, the verification engine may also exist outside the display device 100.

As one example, as illustrated in FIG. 9, the verification engine may be integrated into a wake word verification server 300. The wake word verification server 300 of FIG. 9 is illustrated as being the same as the server 300 of FIGS. 5 and 6, but may be another server or another device.

Use of the verification engine of the wake word verification server 300 may be classified as follows.

### 1) A case in which only the verification engine of the wake word verification server 300 is used

A case may be considered in which the display device 100 receives wake word verification engine information from the server 300 (S551, S552, S651, and S652 of FIGS. 5 and 6) and the verification engine of the server 300 is indicated by the wake word verification engine information. In this case, the display device 100 may transmit a voice (utterance) of a user to the server 300.

The server 300 that receives the voice of the user may execute the wake word verification engine and perform wake word verification for the voice of the user.

When a plurality of verification engines are included in the wake word verification server 300, the display device 100 may control the verification engines to perform verification in parallel.

The server 300 may obtain verification results and transmit the verification results back to the display device 100. When the verification results from all verification engines are received from the server 300, the display device 100 may determine a final verification result (that is, whether the voice of the user is a wake word) based on the received results.

### 2) A case in which the verification engine of the wake word verification server 300 is used together with the verification engine of the display device 100

This case is substantially similar to the embodiment of 1) described above. That is, the wake word verification engine information received by the display device 100 includes not only the verification engine of the display device 100 but also the verification engine of the server 300. In this case as well, the display device 100 may transmit the voice (utterance) of the user to the server 300. In addition, the display device 100 may control the verification engine of the display device 100 and the verification engine of the wake word verification server 300 to perform verification in parallel.

Upon receiving the voice of the user, the server 300 may execute the wake word verification engine and perform wake word verification for the voice of the user. The server 300 may obtain verification results and transmit the verification results back to the display device 100.

The display device 100 may determine a final verification result based on the verification results received from the server 300 and verification results obtained by executing the verification engine of the display device 100.

The verification engine of the server 300 used in the case of 2) may be different from the verification engine embedded in the display device 100.

When the verification engine of the server 300 is used as in 1) or 2), a verification algorithm for a more flexible verification engine may be applied. The server 300 may collect verification results from the display device and verification results obtained by directly performing wake word verification, and may optimize or update the verification algorithm through a method such as machine learning.

Accordingly, the display device 100 and the server 300 may form a system for performing wake word recognition and wake word verification. The descriptions provided above with reference to FIGS. 3 to 7 that are not explicitly described with reference to FIG. 9 may also be applied to the system of FIG. 9.

In another aspect of the present disclosure, the above-described proposals or operations may be provided as code that is capable of being implemented, performed, or executed by computers (herein, the computer is a comprehensive concept including a system on chip (SoC), a processor, a microprocessor etc.) or a computer-readable storage medium or computer program product storing or including the code. The scope of the present disclosure may be extended to the code or the computer-readable storage medium or computer program product storing or including the code.

The preferred embodiments of the present disclosure are provided to allow those skilled in the art to implement and embody the present disclosure. While the present disclosure has been described and illustrated herein with reference to the preferred embodiments thereof, it is understood to those skilled in the art that various modifications and variations could be made therein without departing from the scope of the disclosure. Therefore, the present disclosure is not limited to the embodiments disclosed herein but intends to give the broadest scope consistent with the new principles and features disclosed herein.

## Claims

1. A display device configured to provide a voice recognition function, the display device comprising:
a sensor configured to detect a voice of a user; and
a controller configured to verify whether the voice of the user is a wake-up command for the voice recognition function,
wherein the controller is configured to:
verify the voice of the user by operating a plurality of verification engines in parallel;
first output a result from a verification engine that completes verification of the voice of the user earlier; and
determine, based on results from the plurality of verification engines, whether the voice of the user is the wake-up command for the voice recognition function.

2. The display device of claim 1, wherein the controller is configured to:
transmit a request for a verification engine to a server; and
receive information on the plurality of verification engines in response to the request.

3. The display device of claim 1, wherein the controller is configured to apply different weights to the results from the plurality of verification engines to obtain the results.

4. The display device of claim 1, wherein the plurality of verification engines are determined based on hardware or a software version of the display device.

5. The display device of claim 1, wherein the controller is configured to:
transmit the voice of the user to a server; and
receive a result of verifying the voice of the user from a verification engine of the server,
wherein the result from the server is used to verify whether the voice of the user is the wake-up command for the voice recognition function.

6. The display device of claim 5, wherein the verification engine of the server is different from a verification engine embedded in the display device.

7. The display device of claim 1, wherein the plurality of verification engines are different from a verification engine for verifying a wake-up command for the voice recognition function supported by a latest version of operating system software of the display device.

8. A system comprising a display device and a wake word verification server,
wherein the display device comprises:
a sensor configured to detect a voice of a user; and
a controller configured to verify whether the voice of the user is a wake-up command for a voice recognition function,
wherein the wake word verification server comprises a controller configured to receive the voice of the user from the display device and verify whether the voice of the user is the wake-up command for the voice recognition function, and
wherein the controller of the display device is configured to:
control a plurality of verification engines of the display device or the wake word verification server to operate in parallel to verify the voice of the user; and
determine, based on results from verification engines embedded in the display device and results from verification engines embedded in the wake word verification server, whether the voice of the user is the wake-up command for the voice recognition function.

9. A method for a voice recognition function, the method being performed by a display device comprising a sensor configured to detect a voice of a user and a controller configured to verify whether the voice of the user is a wake-up command for the voice recognition function, the method comprising:
recognizing the voice of the user;
operating a plurality of verification engines in parallel to initiate a procedure for verifying the voice of the user;
first outputting a result from a verification engine that completes verification of the voice of the user earlier; and
determining, based on results from the plurality of verification engines, whether the voice of the user is the wake-up command for the voice recognition function.

10. The method of claim 9, further comprising:
transmitting a request for a verification engine to a server; and
receiving information on the plurality of verification engines in response to the request.

11. The method of claim 9, further comprising:
applying different weights to the results from the plurality of verification engines to obtain the results.

12. The method of claim 9, wherein the plurality of verification engines are determined based on a hardware version and a software version of the display device.

13. The method of claim 9, further comprising:
transmitting the voice of the user to a server; and
receiving a result of verifying the voice of the user from a verification engine of the server,
wherein the result from the server is used to verify whether the voice of the user is the wake-up command for the voice recognition function.

14. The method of claim 13, wherein the verification engine of the server is different from a verification engine embedded in the display device.

15. The method of claim 9, wherein the plurality of verification engines are different from a verification engine for verifying a wake-up command for the voice recognition function supported by a latest version of operating system software of the display device.
